# EUROPÄISCHE PATENTANMELDUNG

(11) **EP 1 837 610 A2**
(43) Veröffentlichungstag der Anmeldung: **26.09.2007**
(21) Anmeldenummer: 07006108.0
(22) Anmeldetag: 24.03.2007
(51) Int. Cl.: F24F 12/00

(54) **Raumlüftungsvorrichtung mit Wärmerückgewinnung aus Abluft**

(30) Priorität: 24.03.2006 DE 102006014104
(71) Anmelder: Posch, Fritz, 4906 Eberschwang (AT)
(72) Erfinder: Posch, Fritz, 4906 Eberschwang (AT)
(74) Vertreter: Beckord, Klaus

(57) **Zusammenfassung**

Eine Laftungsvorrichtung zum Einbau in eine thermische Gebäudehülle (1) mit Energierückgewinnung für Innenräume, mit einem Thermosiphon für den Abluftstrom (AB, FO) aus einem Innenraum und für einen Zuluftstrom (ZU, AU) in den Innenraum, mit einem Wärmetauscher (16), der Energie des Abluftstroms (AB, FO) auf den Zuluftstrom (ZU, AU) überträgt, und mit einem Gebläse (15; 15a) für den Abluftstrom (AB, FO) bzw. Zuluftstrom (ZU, AU), wird dadurch weitergebildet, dass die Luftströme in einem Winkel von mindestens 30° gegenüber der Ebene der thermischen Gebäudehülle (1) geneigt durch den Wärmetauscher (16; 30; 35) geführt sind.

## Beschreibung

Die Erfindung betrifft eine Lüftungsvorrichtung für Innenräume vom Gebäuden mit Energierückgewinnung zum Einbau in eine thermische Gebäudehülle, mit einem Thermosiphon für einen Abluftstrom aus einem innenraum und für einen Zuluftstrom in den Innenraum, mit einem Wärmetauscher, der Energie des Abluftstroms auf den Zuluftstrom überträgt, und mit einem Gebläse für den Ab- bzw. Zuluftstrom,

Derartige Lüftungsvorrichtungen werden insbesondere bei Niedrigenergie- und Passivhäusern eingesetzt, um Wärmeverluste durch Lüften zu reduzieren. Da sie in aller Regel vom Wohnraum aus sichtbar sind, wird auf eine ansprechende Gestaltung Wert gelegt. Dazu gehört, dass sie möglichst bündig in die thermische Gebäudehülle eines Bauwerks, also in dessen Außenwand, eingebaut werden können.

Rekuperative Lüftungsvorrichtungen beeinflussen durch Energierückgewinnung, also der Wärmerückgewinnung im Winter und einer Kälterückgewinnung im Sommer, die sensible Wärme eines Innenraums. Regenerative Lüftungseinrichtungen beeinflussen zusätzlich den Feuchtegehalt der ausgetauschten Luft und damit die so genannte latente Warme.

Die dafür erforderlichen Aggregate beanspruchen einen erheblichen Platz. Es ist nicht immer möglich, sie optisch ansprechend in einer Richtung senkrecht zur Ebene der thermischen Gebäudehülle hintereinander bzw, in Reihe geschaltet anzuordnen, wie es die DE 299 04 161 in einem Ausführungsbeispiel zeigt. Üblicherweise werden daher die erforderlichen Aggregate übereinander in der Ebene einer senkrechten Außenwand angeordnet. Durch den Höhenversatz der Luftanschlüsse auf der Innenseite des Gebäudes einerseits und der Außenseite andererseits wird in der Regel ein Thermosiphon ausgebildet, der eine ungewollte Kattiuftströmung im Winter vermeiden hilft. Die dafür erforderliche Umlenkung der Luftströme sorgt außerdem für eine gewisse Schalldämpfung.

Einen rekuperativen Vertikalflurraumlüfter für den Einbau in eine Gebäudeaußenwand mit einem derartigen Thermosiphon zeigt die DE 100 22 354 C1. Es weist ein vertikal lang gestrecktes, isoliertes Gehäuse mit gedämmten Außenwänden und einem vertikal verlaufenden Schied zwischen einem Zuluftkanal und einem Abluftkanal auf. Der Zuluftkanal und der Abluftkanal werden von Warmerohren durchzogen, die mehrfach untereinander angeordnet und durchgehend durch sowohl den Zuluftkanal als auch den Abluftkanal ausgebildet sind. Sie enthalten ein konvertibles Wärmeträgermedium. Der Luftstrom wird Ober Tangentialventilatoren im Gegenstrom bewirkt. Aufgrund der wandparallelen Fohrung der Luftströme im Raumlüfter müssen die Luftkanäle aufwändig gegenüber dem Außen- bzw. Innenraum des Gebäudes gedämmt werden, um die Effektivität des Raumlüfters nicht zu reduzieren.

Dadurch vergrößern sich zum einen die Abmessungen des Lüfters, so dass sein Einsatz insbesondere in schlanken Wanden aus Platzgründen beschränkt sein kann. Zum anderen erstrecken sich die Flächen, an denen erhöhten Wärmeverluste aufgrund einer zu geringen Dämmstärke auftreten können, über die gesamte Höhe des Wärmetauscherbereichs. Darunter kann die Effektivität des Wärmetauschers leiden.

Auf dem Markt sind Raumlüftungsvorrichtungen bekannt, die hauptsächlich für den Einbau in Räume innerhalb der thermischen Gebäudehülle vorgesehen sind. Bei dieser Einbausituation hat man das Problem, dass man im Winter viele bzw. große "kalte Flächen" im Gebäudeinneren hat.

Als "kalte Flächen" sind jene Gehäuseflächen der Raumlüftungsvorrichtung zu verstehen, die im Inneren der Raumlüftungsvorrichtung von kalter Luft, also von Außen- und Fortluft, umspült sind. Auch die Oberflächen eines Außenluftkanals bzw. eines Fortluftkanals, die sich im Gebäudeinneren befinden, sind als "kalte Fläche" zu betrachten. Die Bezeichnung "kalt" bezieht sich auf die Oberflächentemperatur der dem Innenraum zugewandten Fläche der thermischen Gebäudehülle eines gut gedämmten Gebäudes. Bei Passivhäusern und Niedrigenergiehäusern erreicht man aufgrund der guten Wärmedämmung auch bei sehr niedrigen Außentemperaturen angenehme Oberflächentemperaturen an der Innenseite der thermischen Gebäudehülle. Analog zum Begriff "kalte Fläche" werden hier für die O-berfläche der thermischen Gebäudehülle der Begriff "warme Fläche" verwendet. Durch den Einbau einer Raumlüftungsvorrichtung innerhalb der thermischen Gebäudehülle durchbricht man die gute Wärmedämmung der thermischen Gebäudehülle und die "kalten Flächen" des Raumlüftungssystems müssen bei einer Energiebilanzrechnung für das Gebäude als Teil der thermischen Gebäudehülle betrachtet werden. Da die Wärmedämmung eines Gehäuses einer Raumlüftungsvorrichtung wesentlich geringer ist als die Wärmedämmung der thermischen Gebäudehülle, werden die "kalten Flächen" der Raumlüftungsvorrichtung bei Energiekennzahlberechnungen für Gebäude berücksichtigt, da die Wärmeverluste speziell bei Niedrigenergie- und Passivhäusern einen beträchtlichen Anteil an der Summe der Wärmeverluste haben.

Wenn im Sommer im Gebäude gekühlt wird und eine Überhitzung vermieden werden soll, hat man bei Raumlüftungsvorrichtungen, die innerhalb der thermischen Gebäudehülle angebracht sind, das Problem, dass die angesaugte, sehr warme Außenluft die Raumluft aufheizt Analog zu den "kalten Flächen" im Winterfall verhält es sich mit dem Problem der ,warmen Flächen" im Sommerfall. Die im Winterfall ineffizienten "kalten Flächen" sind also im Sommerfall ineffiziente "warme Flachen". Wärmeverluste im Winterfall sind im Sommerfall Wärmegewinne, so genannte innere Lasten, Dieses Problem der inneren Lasten führt im Sommer zu erhöhtem Kühlbedarf. Der Einfachheit wegen werden Effizienz-Probleme in den weiteren Ausführungen nur anhand der Wärmeverluste im Winterfall beschrieben.

Die kalten Flächen kühlen die Raumluft im Gebäudeinneren ab und es treten Wärmeverluste auf. Von der Außenluft-Seite betrachtet bedeutet dies, dass die kalte Außenluft, die sich im Gerät vor dem Eintritt in den Wärmetauscher befindet von der Raumluft vorgewärmt wird. Da dieser Warmetauschvorgang vor dem Eintritt in den Wärmetauscher stattfindet, kann die verloren gegangene warme aus dem Raum nur zu einem geringen Teil über den Wärmetauscher wieder zurück gewonnen werden. Von der Fortluft-Seite betrachtet bedeutet dies, dass die kalte Fortluft, die sich im Gerät nach dem Austritt aus dem Wärmetauscher befindet, von der Raumluft wieder nachgewarmt wird. Da diese nachgewärmte Fortluft ins Freie geblasen wird, kann dieser Teil der verloren gegangenen Warme nicht mehr zurück gewonnen werden.

Bei Raumlüftungsvorrichtungen, die hinter abgehängten Decken vorgesehen sind, tritt dasselbe Problem auf. Diese Raumlüftungsvorrichtungen sind so flach gebaut, dass sie zwischen der Decke des Raumes und der abgehängten Decke Platz finden. Aufgrund der flachen Konstruktion ist meist nur noch eine sehr dünne Wärmedämmung möglich und das Problem der kalten Flächen im Gebäudeinneren tritt hier noch massiver auf.

Weitere dezentrale Wandintegrierte Raumlüftungsgerate sind bekannt. Derartige Geräte sind nur für dezentrale Anwendungen geeignet. Auch hat man bei diesen Geräten bei Anlagenstilistand das Problem mit Kaltluftströmungen aufgrund der höheren Dichte von kalter Luft. Diese Kaltluftströmungen führen zu Effizienz-Einbußen.

Bei Kanalanordnungen, bei denen die Kanalführung im Wesentlichen senkrecht zur Außenwand verläuft hat man das Problem, dass der Schall sich wenig gehindert ausbreiten kann.

Auch wäre bei diesen Geräten in Kombination mit einem Leitungsnetz die Wartungszugänglichkeit zu den Filtern nicht zufrieden stellend gegeben. Auch die Zugänglichkeit zu den anderen Komponenten der Vorrichtung ist stark eingeschränkt

Da hier weiters die Ventilatoren, Wärmetauscher und Filter senkrecht zur Wand hintereinander angeordnet sind, steht bei dieser Anordnung für den Wärmetauscher nicht die gesamte Außenwandstärke als potentielle Wärmetauscherlange zur Verfügung. Nur die Außenwandstärke abzüglich Ventilatordicke und Filterdicke steht theoretisch für den Wärmetauscher zur Verfügung. Diese Art der Ventilatoranordnung und der Filteranordnung stellt generell und aber speziell bei hocheffizienten Geräten eine bauliche Beschränkung dar.

Da bei diesen wandintegrierten Raumlüftungsgeräten ein rein sensibler Wärmetauscher vorgesehen ist, können diese nicht bei Außentemperaturen betrieben werden, die deutlich unter dem Gefrierpunkt liegen, es sei denn, es ist ein Vorheizregister vorgesehen. Solche Vorheizregister benötigen thermische Energie und sind bei solchen kompakten Geräten meist elektrisch, seltener wassergeführt beheizt. Unabhängig jedoch von der Beheizungsart ist für die Vorwärmung der Außenluft Heizenergie erforderlich. Dieser Heizenergiebedarf zur Vorwärmung der Außenluft schlägt sich negativ auf die Energieeffizienz der Raumlüftungsvorrichtung nieder.

Da die Ventilatoren dieser Geräte nur den Druckverlust Ober den Wärmetauscher und gegebenenfalls den Filter überwinden müssen, werden bei derartigen Geraten flache Axialgebläse eingebaut. Mit solchen Ventilatoren können nur geringe Druckdifferenzen überwunden werden. Aufgrund der flachen Differenzdruck-Volumenstrom-Kennlinie solcher Ventilatoren, hat eine geringe Druckänderung einen sehr großen Einfluss auf den erreichbaren Volumenstrom.

Ein Einsatz einer solchen dezentralen Vorrichtung in Kombination mit einem Leitungsnetz, das die Zuluft verteilt und die Abluft sammelt, ist deshalb aus diesen oben genannten Gründen nicht möglich.

Die Aufgabe der vorliegenden Erfindung ist es daher, eine Lüftungsvorrichtung mit einer verbesserten Effektivität anzugeben.

Zur Lösung der Aufgabe wird die eingangs genannte Lüftungsvorrichtung dadurch weitergebildet, dass die luftströme in einem Winkel von mindestens ca. 30°, beispielsweise 45° bis 50° oder auch bis zu 60° oder 70°, gegenüber der Ebene der thermischen Gebäudehülle geneigt durch den Wärmetauscher geführt sind. In einer Lüftungsvorrichtung mit Thermosiphon, die in einer vertikalen Außenwand als thermischer Gebäudehülle eingebaut ist, hat dies den Effekt, dass die kalte Außenluft im Winter eben nicht wie bisher in der Lüftungsvorrichtung wandparallel vertikal aufwärts durch einen allseits stark gedämmten Wärmetauscher geleitet wird, sondern in einer schräg geneigten Richtung von der Außenseite der Gebäudewand in Richtung Innenraum durch den Wärmetauscher geleitet wird. Beim Durchströmen des Wärmetauschers nimmt sie kontinuierlich Wärme auf. Je weiter sie den Wärmetauscher durchflossen hat, umso wärmer ist also die ursprünglich kalte Außenluft. Damit steigt die Temperaturdifferenz zwischen ihr und der kalten Außenluft und damit auch das Erfordernis, sie gegenüber der kalten Außenwand thermisch zu isolieren. Durch die Schrägführung von der Außenwand weg in Richtung auf den Innenraum zu entsteht zugleich der dafür benötigte keilförmige Raum für Dämmmaterial zwischen der erwärmten Luft und der Außenseite der Gebäudewand. Mit fortschreitender Erwarmung der Luft nimmt auch er kontinuierlich zu. Gering erwärmte Luft ist dadurch mit nur geringer Dämmung gegenüber der Außenluft isoliert, stark erwärmte Luft dagegen bedarfsgerecht durch eine dicke Dämmung. Entsprechende Verhältnisse ergeben sich für die warme Abluft aus dem Innenraum, die ihre Wärme im Wärmetauscher sukzessive abgibt, dadurch abkühlt und daher beim Austritt aus dem Wärmetauscher gegenüber der Außenluft nicht mehr aufwändig gedämmt zu werden braucht. Sinngemäße Verhältnisse ergeben sich selbstverständlich im Sommer bei geringeren Temperaturen im Gebäudeinneren als außen. Die Schrägführung der Luftströme durch den Wärmetauscher ermöglicht also einen wirtschaftlich sinnvollen Einsatz von Dämmmaterial, der genau den thermischen Erfordernissen der Vorrichtung entspricht Damit kann die Vorrichtung bei vergleichbarer Effektivität kostengünstiger und mit kompakteren Außenabmessungen hergestellt werden.

Nach einer vorteilhaften Ausgestaltung der Erfindung verlaufen die Luftströme im Wesentlichen senkrecht zur Ebene der thermischen Gebäudehülle durch den Wärmetauscher. Bei einer Lüftungsvorrichtung, die in einer senkrechten Gebaudeaußenwand als thermischer Gebäudehülle eingebaut ist, wird der Wärmetauscher demzufolge waagrecht durchströmt Bei einem warmen Innenraum und kühler Außenluft im Winter strömt also der warme Abluftstrom innerhalb des Wärmetauschers waagrecht von innen nach außen, während der kalte Zuluftstrom den Wärmetauscher von der Außenseite des Gebäudes her in der Gegenrichtung durchströmt. Die Ausbildung eines Thermosiphons erfordert eine Umlenkung der Zu- und Abluft, so dass die entsprechenden Anschlüsse eine unterschiedliche Höhenlage an der Lüftungsvorrichtung einnehmen. Dies hat zur Folge, dass in der erfinderischen Lüftungsvorrichtung die Kaltluft unabhängig von ihrer Strömungsrichtung, also sowohl vor Eintritt in den Wärmetauscher als auch nach Austritt aus dem Wärmetauscher, ausschließlich auf der Kaltseite der Lüftungsvorrichtung strömt. Dementsprechend fließt die Warmluft vor Eintritt in den bzw. nach Austritt aus dem Wärmetauscher ebenfalls ausschließlich auf der dem Gebäudeinneren zugewandten Warmseite der Lüftungsvorrichtung. Die Luftströme, die den Wärmetauscher passiert haben, können damit ihre Energie, sei es als Wärme oder als Kälte, nicht mehr auf der "falschen Seite" der Lüftungsvorrichtung abgeben und damit unwiederbringlich verlieren, Der vorgeschlagene Aufbau der Lüftungsvorrichtung minimiert folglich die "kalten Flachen" der Vorrichtung, die gegenüber der Innenraumseite der Lüftungsvorrichtung thermisch gedämmt werden müssen. Dementsprechend gering fallen die "warmen Flachen" aus, die gegenüber der kühlen Außenluft gedämmt werden müssen. Dadurch können Energieverluste der Lüftungsvorrichtung deutlich reduziert und ihre Effektivität erheblich gesteigert werden. Durch den weitgehenden Verzicht auf große gedämmte Flächen kann einerseits Dämmstoff eingespart werden. Andererseits kann die Lüftungsvorrichtung selbst bei gleicher Effektivität minimale Außenabmessungen als vergleichbare Vorrichtungen erhalten, womit sie auch bei beengten Platzverhaltnissen und in schlankeren Außenwänden effektiv einsetzbar bleibt.

Unter einer im Wesentlichen senkrechten Durchströmung des Wärmetauschers bezüglich der Ebene der thermischen Außenhülle sind auch solche Strömungen zu verstehen, die davon abweichende Strömungskomponenten in der Ebene der thermischen Außenhülle aufweisen. Sie können sich in Abhängigkeit vom Typ des eingesetzten Wärmetauschers ergeben. Beispielsweise lassen sich bei einem Kreuzstrom-Plattenwärmetauscher andere als senkrechte Strömungskomponente nicht vermeiden, um einen möglichst großflächigen Austausch zwischen Zu- und Abluft zu bewirken. Dennoch verläuft die wesentliche Strömungsrichtung durch den Wärmetauscher senkrecht zur Ebene der Gebäudehülle.

Trotz dieser neuartigen Strömungsführung und der dafür erforderlichen Anordnung der Wärmetauscherdurchströmung in einer gegenüber herkömmlichen Anlagen um bis zu 90° gedrehten Lage lässt sich seine Leistung wie gehabt über eine größere Breite bzw. Höhe bei gleichzeitig geringer Bautiefe der Lüftungsvorrichtung anpassen. Alle darüber hinaus erforderlichen Aggregate, wie Filter, Gebläse, Schalldämpfer etc. lassen sich unabhängig von den Abmessungen der Lüftungsvorrichtung in bekannter Weise in der Gebäudewand unterbringen.

In einem Thermosiphon erfährt die Luftströmung bereits eine zweifache Richtungsumlenkung. Nach einer vorteilhaften Ausgestaltung der Erfindung sind die Luftströme stromauf und/oder stromab des Wärmetauschers jeweils mehrmals um einen Winkel von mindestens 30°, vorzugsweise von 60° und in der Regel von ca. 90° umgelenkt Die prinzipiell in einer Richtung senkrecht zur thermischen Au-ßenhülle angesaugte Außenluft erreicht den ebenfalls senkrecht zur thermischen Außenhülle durchströmten Wärmetauscher also nicht geradewegs, sondern erhalt eine zweifache Umlenkung. Die Luftströmung erhält dadurch einen quasi abgetreppten Verlauf, wobei jeweils zwei Richtungsumlenkungen stromauf und/oder zwei stromab des Wärmetauschers angeordnet sind. Dies ermöglicht nicht nur eine Ausbildung des Thermosiphons, sondern verstärkt zusätzlich auch den Schall- und Winddruckdämmeffekt der Lüftungseinrichtung. Die Winkel aufeinander folgender Richtungsumlenkungen müssen dabei nicht zwingend den gleichen Betrag aufweisen, sondern können betragsmäßig voneinander abweichen. Je größer der Umlenkungswinkel in dem oben genannten Bereich zwischen 30° und 90° gewählt wird, umso flacher kann die Lüftungsvorrichtung ausgebildet werden.

Durch die Umlenkung der Luftströmungen vor und nach dem Wärmeübertrager um einen Winkel von mindestens ca. 30° werden die kalten Abschnitte und die warmen Abschnitte der Luftkanäle geteilt, und der Temperaturverlauf der strömenden Luft ist dem Temperaturverlauf in der thermischen Gebäudehülle angepasst. Die Größe der potentiellen kalten Flachen" wird aufgrund der Kanalanordnung drastisch reduziert Aufgrund dieser Luftführung wird die Temperaturdifferenz zwischen der strömenden Luft und der thermischen Gebäudehülle möglichst gering gehalten. Da sich die Wärmeübergangsleistung linear zur Temperaturdifferenz verhält, ist der Wärmetausch zwischen den Luftströmen und der thermischen Gebäudehülle, aufgrund der geringen Temperaturdifferenz, reduziert Dieses Angleichen der Isothermen innerhalb der Raumlüftungsvorrichtung an die Isothermen der thermischen Gebäudehülle hat den Vorteil, dass beim Einbau der Raumluftungsvorrichtung die Wärmebrücke zwischen der Raumlüftungsvorrichtung und der thermischen Gebäudehülle reduziert wird. Durch diese Maßnahmen wird also ein wärmebruckenfreierer Einbau gewährleistet, wodurch Wärmeverluste reduziert werden, die Energieeffizienz also verbessert wird.

Prinzipiell kann die Lüftungsvorrichtung lediglich einen Kanal aufweisen, in dem der Wärmetauscher angeordnet ist. Eine derartige Lüftungsvorrichtung arbeitet im diskontrinuierlichen Betrieb, in dem sie eine vorbestimmte Zeit Luft aus dem Innenraum nach außen bläst und für ein weiteres Zeitintervall Luft von außen in der Gegenrichtung in den Innenraum fördert. Nach einer weiteren vorteilhaften Ausgestaltung der Erfindung sind die Zuluft und die Abluft in Betrieb der Lüftungsvorrichtung gleichzeitig und in separaten Kanälen, nämlich einem Abluft-/Fortluftkanal und einem Außen-/Zuluftkanal, im Gegenstrom zueinander geführt Dadurch kann eine höhere Effektivität der Lüftungsvorrichtung erreicht werden, weil sie kontinuierlich betrieben werden kann. Denn durch die kontinuierlich arbeitende Vorrichtung werden beim Wärmeaustausch Umschaltverluste vermieden. Diesem Zweck dient auch das mindestens eine Gebläse, das ortsfest eingebaut ist und nur in einer Richtung kontinuierlich fördert, also auch keine Umschaltverluste hat.

Das Gebläse muss die auszutauschende Luft durch zwei Kanäle befördern. Verbessert wird dieses Ziel durch zwei ortsfest vorgesehene Gebläse, weil die Anpassung der Abluft- und Zuluftvolumenströme die Leckageströme durch die thermische Gebäudehülle hindurch reduziert, womit eine weitere Erhöhung der Energieeffizienz erreicht wird. Durch zwei Gebläse kann außerdem in den zu belüftenden Räumen wahlweise ein Unter- bzw. Überdruck oder ein höherer Zuluft-/ bzw. Abluftvolumenstrom eingestellt werden. Dies hat im Falle von Überdruck bzw. höherem Zuluftvolumenstrom den Vorteil, dass beispielsweise aus einem Kaminofen kein für Bewohner gefährliches Rauchgas in den Innenraum des Gebäudes entweichen kann. Falls also der Kaminofen undichte Stellen aufweist, wird aufgrund des Überdrucks im Raum Raumluft in den Kaminofen gedrückt.

Die Effektivität der Lüftungsvorrichtung kann noch dadurch gesteigert werden, dass zumindest Teile einer Trennwand zwischen dem Abluft-/Fortluftkanal und dem Außen-/Zuluftkanal selbst als Warmetauscherflächen ausgebildet sind. Die Trennwand kann im Wesentlichen senkrecht zur Ebene der thermischen Gebäudehülle stehen. Die Ausführung der Trennwand aus gut warmeleiträhigem Material führt bei dieser Anordnung zu einer zusätzlichen Effizienzsteigerung, da die gesamte Fläche der Trennwand als zusätzliche Wärmetauscherfläche auch im Gegenstromprinzip nutzbar gemacht wird. Ab der Stelle, an der die über den Energieübertrager erwärmte Außenluft den Energieübertrager als Zuluft ZU verlässt, wird sie von der etwas wärmeren Abluft über die Trennwand im Bereich der warmen Kanalabschnitte noch zusätzlich nachgewärmt. Weiters wird ab der Stelle, an der die über den Energieübertrager gekühlte Abluft den Energieübertrager, als Fortluft verlässt, die Fortluft von der etwas kühleren Außenluft über die Trennwand im Bereich der kalten Kanalabschnitte noch zusätzlich gekühlt Von der Außenluft-Seite betrachtet bedeutet dies, dass die kalte Außenluft, die sich im Gerät vor dem Eintritt in den Energieübertrager im Bereich des kalten Abschnitts des Außen-/Zuluftkanals befindet, von der Fortluft über die Trennwandvorgewarmt wird.

Die erfindungsgemäße Anordnung bewirkt also warme und kalte Abschnitte des Luftkanals. Nach einer weiteren vorteilhaften Ausgestaltung der Erfindung sind die warmen Abschnitte gegen die Ausbildung von Wärmebrücken gegenüber der Lüftungsvorrichtung im Bereich der Außenseite der thermischen Gebäudehülle und die kalten Luftabschnitte gegenüber dem warmen Innenraum mit einer Wärmedämmung versehen. Dies hat den Vorteil, dass die aufgrund der Kanalanordnung bereits stark reduzierten "kalten Flachen" durch eine erhöhte Wärmedämmung zu "warmen Flächen" werden. Die Kanalanordnung ermöglicht in diesen Bereichen eine erhöhte Dämmstärke vorzusehen. Diese Dämmungen dienen auch der Reduktion des Schallpegels.

Nach einer weiteren vorteilhaften Ausgestaltung der Erfindung umfasst die Lüftungsvorrichtung einen regenerativen Wärmetauscher. Da er auch die Luftfeuchte des Innenraums erhält, sorgt er für ein besseres Raumklima und eine wesentlich höhere Effizienz. Das Vorsehen eines regenerativen Wärmeübertragers verbessert die Energieeffizienz dahingehend, dass sowohl sensible Wärme als auch latente Wärme aus der Abluft zurück gewonnen wird. Da ohne Kondensatbildung zu betreiben, können regenerative Wärmeübertrager auch bei Außentemperaturen nicht einfrieren, die deutlich unter dem Gefrierpunkt liegen. Will man rein sensible Wärmetauscher bei diesen Temperaturen betreiben, ist ein Vorheizen der Außenluft erforderlich. Dies geschieht meist über einen Erdwärmetauscher oder über ein Vorheizregister. Der Erdwärmetauscher hat den Nachteil, dass er hohe Investitionskosten hat und im Betrieb zusätzliche Antriebsenergie zur überwindung des Druckverlustes benötigt, wodurch die Effizienz des Verfahrens beeinträchtigt ist. Der Einsatz eines Vorheizregisters erhöht bei tiefen Temperaturen den Energieverbrauch der Vorrichtung. Durch den Einsatz eines regenerativen Wärmetauschers ist also eine höhere Effizienz erreichbar.

Nach einer weiteren vorteilhaften Ausgestaltung der Erfindung umfasst die Lüftungsvorrichtung einen Plattenwärmetauscher. Eine derartige Lüftungsvorrichtung ist besonders kostengünstig, da ein Plattenwarmetauscher einen einfachen Aufbau ohne bewegliche Teile bietet Zudem ist die Energiebilanz einer derartigen Lüftungsvorrichtung verbessert, weil der Plattenwärmetauscher ohne Energiezufuhr arbeitet. Wenn dieser Wärmeübertrager so in der Raumlüftungsvorrichtung eingebaut ist, dass die Luftströme des Abluft-/Fortluftkanals und des Außen-/Zuluftkanals vor und nach dem Wärmeübertrager um einen Winkel größer als 60° umgelenkt, also treppenförmig, geführt werden, kann auch mit dem Einsatz eines Plattenwärmetauschers die Raumlüftungsvorrichtung sehr flach ausgeführt werden und passt auch in dünnere Wände.

Nach einer dazu alternativen Ausführungsforrn umfasst die Lüftungsvorrichtung einen Rotationswärmetauscher. Er stellt einen effektiveren Wärmetauscher dar, bei dem der Feuchteaustausch zwischen Zu- und Abluft einfacherer umsetzbar ist, da alle Kanäle des Wärmetauschers von beiden Luftströmen im Gegenstrom durchströmt werden. Zudem ist er über die Drehzahl stufenlos regelbar. Bei optimaler Ausführung der Sorptionsschicht ist die Feuchterückgewinnung außerdem nahezu unabhängig von der Wärmerückgewinnung zu regeln. Schließlich haben Rotationswärmetauscher sehr geringe Druckverluste. Der Einsatz eines Rotationswärmeübertragers hat den Vorteil, dass dieser im Vergleich zu Plattenwärmetauschern eine geringere Dicke aufweist Wenn der Rotationswärmeübertrager so in der Raumlüftungsvorrichtung eingebaut ist, dass die Luftströme des Abluft-/Fortluftkanals und des Außen-/Zuluftkanals vor und nach dem Wärmeübertrager um einen Winkel großer als 60° umgelenkt geführt werden, kann die Raumlüftungsvorrichtung sehr flach ausgeführt werden und passt auch in dünnere Wände. Ober die Durchmesservergrößerung kann in beliebigen Abstufungen die Effizienz in Abhängigkeit vom Volumenstrom realisiert werden. Bei Vergrößerung der Raumlüftungsvorrichtung auf grö-ßere Volumenströme ändern sich nur die Breite und Höhe der Raumlüftungsvorrichtung wesentlich. Die Dicke als von der Wandstärke der thermischen Gebäudehülle begrenztes Maß muss nicht zwangsläufig wesentlich vergrößert werden. Somit ist auch eine für den Wandeinbau erforderliche flache Bauweise mit hohen Volumenströmen zur Abdeckung des Luftbedarfs mehrerer Wohneinheiten möglich. Es ist aufgrund der flachen Bauweise möglich, die Ab- und Zuluftfilter direkt vor bzw. nach dem Rotationswärmetauscher zu positionieren, ohne dass die Dicke der thermischen Gebäudehülle überschritten würde. Die Positionierung der Filter an dieser Stelle hat den Vorteil, dass große Filterflächen realisierbar sind und dadurch der Druckverlust über die Filter gering gehalten wird und der Abscheidegrad der Filter erhöht wird.

Nach einer weiteren vorteilhaften Ausgestaltung der Erfindung umfasst die Lüftungsvorrichtung neben dem zentralen Wärmetauscher einen oder mehrere zusätzliche Wärmetauscher in den Luftkanälen. Ein derartiger zusätzlicher Wärmetauscher zum Beispiel als Vorheizregister im Außenluftstrom hat den Vorteil, dass kalte Außenluft vor dem Eintritt in den zentralen Wärmetauscher soweit vorgewärmt werden kann, dass er nicht infolge Kondensatbildung vereist. Eine derart ausgestattete Lüftungsvorrichtung muss also bei zu tiefen Außentemperaturen nicht außer Betrieb genommen werden. Ein zusätzlicher Wärmetauscher im Zuluftluftstrom hat den Vorteil, dass die über den zentralen Wärmetauscher vorgewärmte Zuluft im Winter gegebenenfalls nachgeheizt werden kann. Im Sommer dagegen kann die Zuluft Ober den zusätzlichen Wärmetauscher auch weiter abgekühlt werden. Für andere Anwendungen kann die Positionierung von zusätzlichen Wärmetauschern auch im Abluftkanal oder im Fortluftkanal vorteilhaft sein. Die Art des zusätzlichen Wärmetauschers, nämlich zum Beispiel elektrisch oder wassergeführt, ist von untergeordneter Bedeutung.

Die Lüftungsvorrichtung kann außerdem Ober eine oder mehrere zusätzliche Be- und Entfeuchtungskomponenten in den Luftkanälen verfügen. Mit ihrer Hilfe kann die Luft feuchtemäßig separat konditioniert werden. Insbesondere die Befeuchtung der Luft kann zudem gezielt zur Abkühlung der Luft eingesetzt werden.

Zwei Ausführungsbeispiele der Erfindung werden nachfolgend anhand von Zeichnungen beispielshalber näher erläutert. Es zeigen:
- Fig. 1: eine Einbausituation in eine Wand einer erfindungsgemäßen Vorrichtung im Aufriss;
- Fig, 2: die Einbausituation in einem senkrechten Bauteil der thermischen Gebäudehülle in einer Schnittansicht gemäß der Schnittführung II-II in Fig. 1;
- Fig. 3: die Einbausituation in einem waagrechten Bauteil der thermischen Gebäudehülle;
- Fig. 4: ein Ausführungsbeispiel in einer aufgebrochenen Schrägansicht mit einem Plattenwärmetauscher; und
- Fig. 5: ein Ausführungsbeispiel mit einem geneigt angeordneten Wärmetauscher.

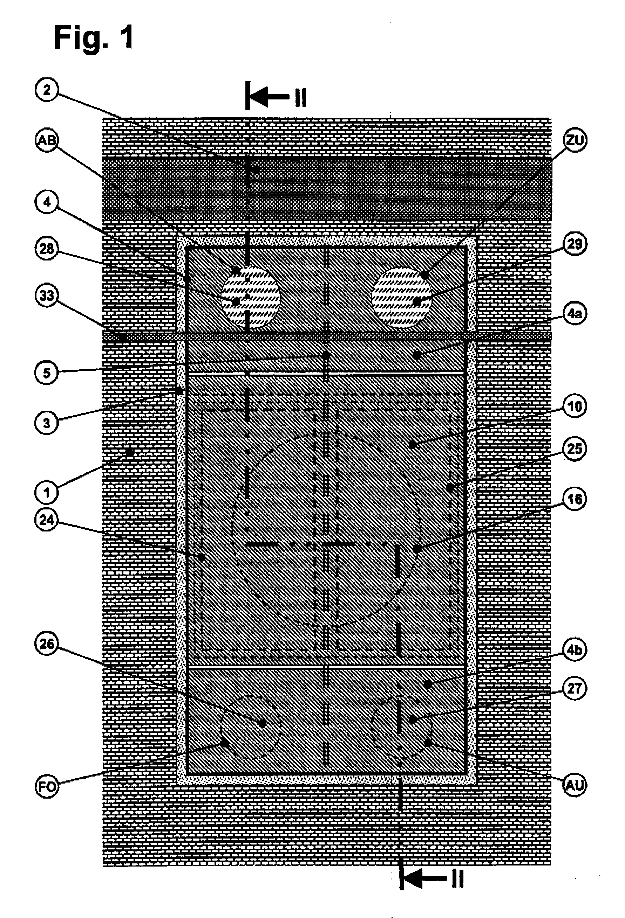

In Fig. 1 ist eine erfindungsgemäße Raumlüftungsvorrichtung von einem Innenraum eines Gebäudes aus gesehen dargestellt, die in einer thermischen Gebäudehülle 1 integriert ist Sie ist knapp unterhalb einer Geschoßdecke 2 und im Bereich einer darunter montierten abgehängten Decke 33 eingebaut Die Ausführung der thermischen Gebäudehülle 1, z.B. als Holz-Leichtbau oder in Stahlbeton, ist für den Einbau der Raumlüftungsvorrichtung von untergeordneter Bedeutung. Dafür ist lediglich eine Öffnung in der Gebäudehülle 1 vorzusehen, wie sie für den wärmebrückenfreien Einbau von Passivhausfenstern erforderlich ist. Die Raumlüftungsvorrichtung wird wie ein Fenster in die Öffnung eingesetzt und mit Montageschaum 3 montiert.

Die Raumlüftungsvorrichtung umgibt eine Gehäusewanne 4 mit wandparallelen und innenraumseitigen Gehäuseabdeckungen 4a, 4b und einer dazwischen angeordneten Servicetür 10. Hinter der Sevicetür 10 sind ein Rotationswärmetauscher als Energieübertrager 16, ein Abluftfilter 24 und ein Zuluftfilter 25 angeordnet. In einem oberen Bereich der Raumlüftungsvorrichtung treten in der Gehauseabdeckung 4a ein Anschluss 28 für die Abluft AB und ein Anschluss 29 für die Zuluft ZU deckenparallel aus der Gehäusewanne 4 aus. Der Abluftanschluss 28 und der Zuluftanschluss 29 liegen zwischen der Geschoßdecke 2 und der abgehängten Decke 33, so dass ein daran angeschlossenes Rohrleitungsnetz Platz sparend und optisch ansprechend in das Gebäude integriert werden kann.

Die Gehäusewanne 4 und die Gehäuseabdeckungen 4a, 4b der Raumlüftungsvorrichtung sind aus Blech gefertigt und mit einer Dämmung versehen. Innerhalb des Gehäuses 4 im Bereich der Gehauseabdeckung 4a sind keine wartungsintensiven Komponenten verbaut, da im Falle einer erforderlichen Wartungsarbeit in diesem Bereich die Gehäuseabdeckung 4a nur mit hohem Aufwand entfernt werden könnte. Für Komponenten, die für einen Servicetechniker gut erreichbar sein müssen, ist der Raum in der Gehäusewanne 4 hinter der Gehäuseabdeckung 4b vorgesehen. Diese Gehäuseabdeckung 4b ist mittels Schrauben mit der Gehäusewanne 4 verbunden und vom Servicetechniker auf einfache Weise zu entfernen.

Die Servicetür 10 ist einfach zugänglich ausgeführt, so dass der Benutzer der Raumlüftungsvorrichtung einfache Kontroll- und Wartungsaufgaben wie z.B. Kontrolle und Wechseln des Abluftfilters 24 oder des Zuluftfilters 25 selbst durchführen kann. Je nach Anforderung kann die Servicetür 10 mit Schnellverschlüssen, Schrauben oder versperrbar mit einem Schloss ausgeführt sein. Das autwandigere Schloss hat den Vorteil, dass Unbefugte keinen Zugang zur Raumlüftungsvorrichtung haben.

Auf der der Ansichtsfläche in Figur 1 gegenüberliegenden und einer Außenseite des Gebäudes zugewandten Seite der Raumlüftungsvorrichtung befinden sich in ihrem unteren Bereich ebenfalls deckenparallel verlaufende Anschlüsse 26, 27 für die Fortluft FO und die Außenluft AU. Im Betrieb der Vorrichtung strömt z.B. warme Innenraumabluft AB über den Anschluss 28 unter Abgabe ihrer Energie an den Übertrager 16 durch ihn hindurch und als Fortluft FO über den Anschluss 26 ins Freie. Im Gegenstrom fließt kühle Außenluft AU durch den Anschluss 27 ein, ebenfalls durch den Übertrager 16 hindurch, wo sie die Energie und Feuchtigkeit der Abluft AB aufnimmt, und als Zuluft ZU über den Anschluss 29 in den Innenraum des Gebäudes gelangt Die Lage der Anschlüsse 27, 26 für die Außenluft AU und die Fortluft FO am unteren Ende der Vorrichtung und die Anschlüsse 29, 28 für die Zuluft ZU und die Abluft AB an ihrem oberen Ende verhindert bei Anlagenstillstand und bei kälterer Umgebungsuft außerhalb des Gebäudes und wärmerer Innenraumluft aufgrund einer Thermosiphonwirkung eine ungewollte Kaltluftströmung in den Raum

Der Abluft-/Fortluftkanal von AB bis FO und der Außenluft-/Zuluftkanal von AU bis ZU sind parallel zueinander angeordnet und über eine Trennwand 5 voneinander getrennt. Die Trennwand 5 steht senkrecht zur Ebene der thermischen Gebäudehülle 1 und ist aus gut wärmeleitendem Material gefertigt, damit die Trennwand 5 als zusätzliche Wärmetauschfläche genutzt werden kann.

Auch ist gut ersichtlich wie der Abluft-/Fortluftkanal vom Anschluss für die Abluft AB über den warmen Abschnitt des Abluft-/Fortluftkanals 28 und den kalten Abschnitt des Abluft-/Fortluftkanals 26 bis zum Anschluss für die Fortluft FO verläuft. Der Außenluft-/Zuluftkanal verläuft vom Anschluss für die Außenluft AU über den kalten Abschnitt des Außen-/Zuluftkanals 27 und den warmen Abschnitt des Außen-/Zuluftkanals 29 bis zum Anschluss für die Zuluft ZU.

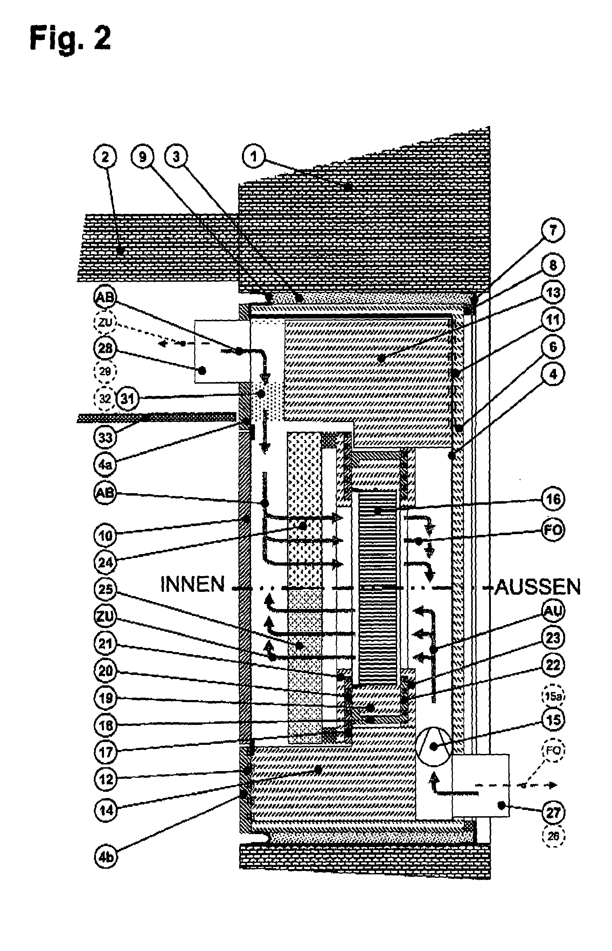

Fig. 2 zeigt die Raumlüftungsvomchtung in der Schnittansicht entsprechend der Schnittführung II-II in Fig. 1. Sie verdeutlicht den Verlauf des Abluft-/Fortluftkanals vom Anschluss 28 für die Abluft AB durch einen Schalldämpfer 31 und weiter abwärts durch den Luftfilter 24 in den Energieübertrager 16 hinein. Nach Abgabe ihrer Wärme und Feuchtigkeit saugt sie ein Gebläse 15a als Fortluft FO weiter abwärts durch den Anschluss 26 (beide gestrichelt) ins Freie. Im Gegenstrom bläst ein Gebläse 15 Au-ßenluft AU über den Anschluss 27 aufwärts in den Energieübertrager 16. Von dort gelangt die darin aufgewärmte und befeuchtete Luft als Zuluft ZU durch den Luftfilter 25 und einen Schalldämpfer 32 über den Anschluss 29 in den innenraum. Beide Luftströme durchströmen den Übertrager 16 also in horizontaler Richtung bzw. senkrecht zur Ebene der Gebäudehülle 1. Dies gelingt nur Ober eine jeweils doppelte Umlenkung der Luftströme um jeweils ca. 90° je Umlenkung stromauf und stromab des Übertragers 16. Sie allein bewirkt schon eine Schalldämpfung, die sich durch die zusätzlichen Schalldämpfer 31, 32 steigern lasst. Außerdem schützt sie die Vorrichtung gegenüber Winddruck. Der stufenförmige Verlauf des Abluft-/Fartluftstroms und des Außenluft-/Zuluftstroms bietet außerdem den Vorteil des Thermosiphon-Effekts,

Der Übertrager 16 teilt außerdem die Luftströme in einen warmen Abschnitt eines Abluft- und Fortluftstroms in dem der Rauminnenseite zugewandten Teil der Vorrichtung vom Anschluss 28 für die Abluft AB bis zum Übertrager 16 und einen kalten Abschnitt vom Übertrager 16 bis zum Anschluss 26 für die Fortluft FO in dem der Außenseite zugewandten Teil der Vorrichtung. Der Außenluft-/Zuluftstrom verläuft dementsprechend vom Anschluss 27 für die Außenluft AU über den kalten Abschnitt der Vorrichtung zum Übertrager 16 und stromauf des Übertragers über den warmen Abschnitt der Vorrichtung bis zum Anschluss 29 für die Zuluft ZU.

Der Energiebertrager 16 ist also derart positioniert, dass die kalten Seiten des Energieübertragers 16, an denen kalte Außenluft in den Energieübertrager 16 eintritt bzw. kalte Fortluft ihn verlässt, in Richtung der Außenseite der thermischen Gebäudehülle 1 angebracht sind und die warmen Seiten des Energieübertragers 16, an denen warme Abluft in den Energieübertrager 16 eintritt bzw. warme Zuluft ihn verlässt, in Richtung der Innenseite der thermischen Gebäudehülle 1 angebracht sind. Der Energieübertrager 16 teilt also die kalten Abschnitte 26, 27 und die warmen Abschnitte 28, 29 der Luftkanäle. Dadurch ist der Temperaturverlauf der strömenden Luft dem Temperaturverlauf in der thermischen Gebäudehülle angepasst. Dadurch wird eine Annäherung des isothermenverlaufs der strömenden Luft innerhalb Raumlüftungsvorrichtung an den Isoihermenverlauf der thermischen Gebäudehülle 1 erreicht. Aufgrund dieser Luftführung, wird die Temperaturdifferenz zwischen der strömenden Luft und der thermischen Gebäudehülle 1 möglichst gering gehalten. Da sich die Wärmeübergangsleistung linear zur Temperaturdifferenz verhält, ist der Wärmetausch zwischen den Luftströmen und der thermischen Gebäudehülle 1, aufgrund der geringen Temperaturdifferenz, reduziert. Dieses Angleichen der Isothermen innerhalb der Raumlüftungsvorrichtung an die Isothermen der thermischen Gebäudehülle 1 hat den Vorteil, dass beim Einbau der Raumlüftungsvorrichtung die Wärmebrücke zwischen der Gehäusewanne 4 der Raumlüftungsvorrichtung und der thermischen Gebäudehülle 1 im Bereich des Montageschaumes 3 reduziert wird. Die Größe der potentiellen "kalten Flächen" wird erfindungsgemäß aufgrund dieser Kanalanordnung drastisch reduziert

Die in Bezug auf den Dämmstandard der thermischen Gebäudehülle 1 noch vorhandenen potentiellen zwei Wärmebrücken 11, 12 werden mit Warmedämmungen 13, 14 versehen. Weiters wird zur Erhöhung der Energieeffizienz die Rotorkassette, die aus zwei Blechkonstruktionen 17,18 besteht, an mehreren Stellen mit Dämmung 19,21,23 versehen um den geräteinternen Warmeenergiefluss von der warmen Seite der Raumlüftungsvorrichtung Ober die Wärmeübertragungsflächen 20,22 zur kalten Seite der Raumlüftungsvorrichtung zu minimieren, da dieser Wärmefluss die aus der Abluft AB zurückgewonnene Energie der Zuluft ZU wieder zum Teil zurück auf die kalte Seite der Raumlüftungsvorrichtung leiten würde. Sämtliche Dämmungen haben neben der Wärmeschutzfunktion auch die Funktion, die Schallemissionen der Raumlüftungsvorrichtung zu minimieren.

In der Laibung der Öffnung in der thermischen Gebäudehülle 1 ist ein umlaufender Blechwinkel 7 angebracht Er dient bei der Montage als Anschlag beim Positionieren der Raumlüftungsvorrichtung. Gegen die Laibung ist der umlaufende Blechwinkel 7 wind- und regenfest abgedichtet. In Kombination mit dem Dichtungsband 8 ist die winddichte Ebene der thermischen Gebäudehülle 1 geschlossen. Mit dem Montageschaum 3 wird die Raumlüftungsvorrichtung in der Maueröffnung fixiert. Die innere Abdichtung (Dampfsperre bzw. -bremse) erfolgt mit einem Fensterklebeband 9 das in wind- und dampfdichten Ausführungen für Fensterabdichtungen bekannt ist. Die Anschlussfläche für das Fensterklebeband 9 am Raumlüftungsgerät ist durch ein nach außen U-förmig gekröpftes Blech der Gehäusewanne 4 auf der Innenseite der thermischen Gebäudehülle 1 vorgesehen.

Die Gehäusewanne 4 ist in der Laibung umlaufend und auf der Außenfläche, die parallel zur Ebene der thermischen Gebäudehülle ist, mit einer Dämmung 6 versehen. Die gedämmten Gehäuseabdeckungen 4a, 4b sind hier mit der Gehäusewanne 4 demontierbar verschraubt, um die Zugänglichkeit über die gesamte Innenfläche des Raumlüftungsgerats zu ermöglichen, wobei für die Positionierung wartungsintensiverer Komponenten der Raum im Bereich der Dämmung 14 zu bevorzugen ist, da die Gehäuseabdeckung 4b einfacher zu demontieren ist als die Gehäuseabdeckung 4a. Für laufende Wartungs- und Instandhaltungsarbeiten, wie beispielsweise Filterwechsel, ist in diesem Ausführungsbeispiel eine gedämmte Servicetür 10 vorgesehen die vom Anlagenbenutzer ohne besondere Hilfsmittel geöffnet werden kann. Die senkrecht auf die Ebene der thermischen Gebäudehülle 1 stehende Trennwand 5 sollte vorzugsweise nicht gedämmt sein, um die Wärmeübertragung von der wärmeren Abluft/Fortluft auf die kältere Zuluft/Außenluft zu verbessern und somit ist diese Trennwand 5 als zusätzliche Wärmetauscherfläche nutzbar gemacht.

Das Gebläse 15 bzw. 15a ist in der Nahe des Außenluftanschlusses 27 bzw. Fortluftanschlusses 26 vorgesehen. Falls zwei Gebläse 15, 15a ortsfest vorgesehen sind, sind die Positionen der Gebläse so gewählt, dass in Kombination mit einem Luftverteilungssystem im Raum innerhalb der thermischen Gebäudehülle 1 der Druck im Außen-/Zuluftkanal unmittelbar vor dem Eintritt in den Energieübertrager 16 höher ist als der Druck im Abluft-/Fortluftkanal unmittelbar vor dem Eintritt In den Energieübertrager 16, um zu vermeiden, dass im Falle von Undichtigkeiten zwischen den Luftkanälen ein Falschluftstrom vom Außen-/Zuluftkanal in den Abluft-/Fortluftkanal entsteht. Es wird vermieden, dass verbrauchte Abluft, die mit Gerüchen, Schadstoffen etc. belastet ist, aus dem Abluft-/Fortluftkanal in den Außen-/Zuluftkanal übertragen wird.

Weiters ist die Raumlüftungsvorrichtung in Fig. 2 mit dem Zuluftfilter 25 und dem Abluftfilter 24 ausgestattet. Mit dem Zuluftfilter 25 wird die Qualität der Zuluft verbessert, wobei neben dem Staub aus der angesaugten Außenluft auch unangenehme Geruchsstoffe im Filter 25 abgelagert bzw. absorbiert werden können. Der Abluftfilter 24 schützt empfindliche Komponenten der Raumlüftungsvorrichtung vor Verschmutzung und Staub. Auch im Abluftfilter 24 können unangenehme Geruchsstoffe aus der Abluft AB abgelagert bzw. absorbiert werden.

Durch den Einbau eines Schalldämpfers 31, 32 kann die Geräuschemission der Raumlüftungsvorrichtung reduziert werden. Die Schallwerte der Raumlüftungsvorrichtung sind im Allgemeinen so gering, dass auf einen Einbau eines Schalldämpfers im Luftkanalnetz verzichtet werden kann.

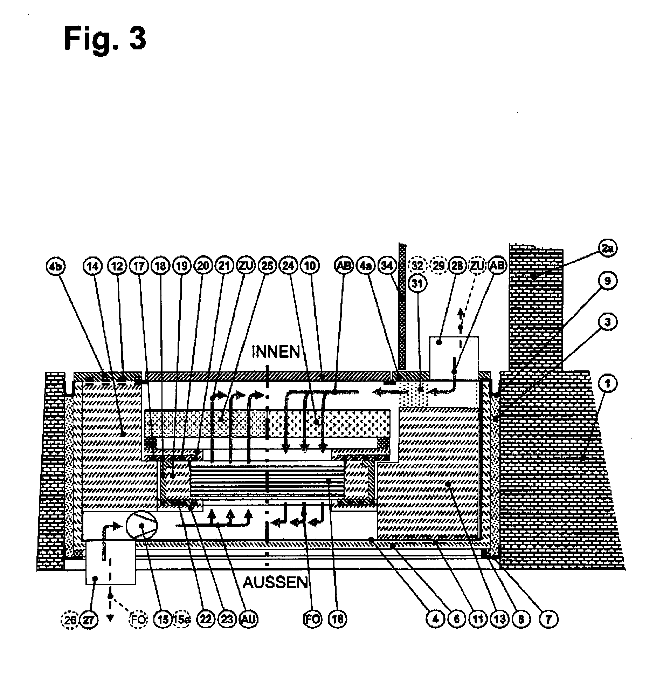

In Fig. 3 ist eine erfindungsgemäße Raumlüftungsvorrichtung wie in Fig. 2 dargestellt, allerdings in einer waagrechten Einbaulage. Es ist eine Schnittansicht entsprechend Schnittführung II-II in Fig. 1 dargestellt Die Position der Raumlüftungsvorrichtung gemäß Figur 3 ist so gewählt, dass die Raumlüftungsvorrichtung knapp neben einer Wand 2a Platz findet, um den Abluftanschluss 28 und den Zuluftanschluss 29 zwischen die Wand 2a und eine vorgesetzte Wandschale 34 positionieren zu können. Ein angeschlossenes Rohrleitungsnetz kann somit Platz sparend und optisch ansprechend in das Gebäude integriert werden.

Es erstreckt sich der Abluft-/Fortluftkanal vom Anschluss 28 für die Abluft AB über den warmen Abschnitt des Abluft-/Fortluftkanals und den kalten Abschnitt des Abluft-/Fortluftkanals bis zum Anschluss 26 für die Fortluft FO. Der Außenluft-/Zuluftkanal verläuft vom Anschluss 27 für die Außenluft AU über den kalten Abschnitt des Außen-/ZuluftKanals und den warmen Abschnitt des Außen-/Zuluftkanals bis zum Anschluss 29 für die Zuluft ZU. Auch in dieser Einbauvariante hat dieser stufenförmige Verlauf des Abluft-/Fortluftkanals und des Außenluft-/Zuluftkanals den Vorteil, dass der Thermosiphon-Effekt genutzt wird.

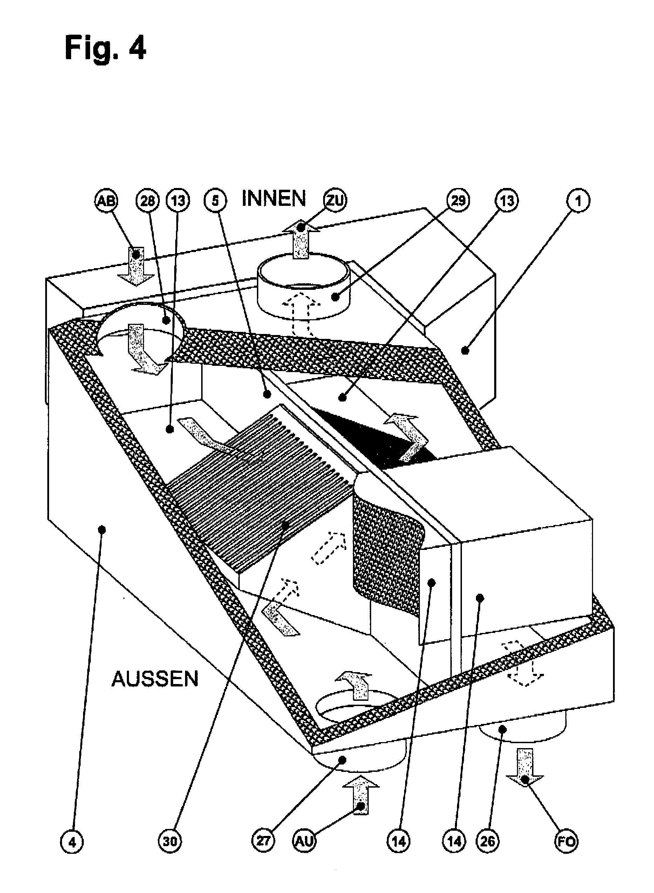

In Fig. 4 ist eine weitere Ausführung der erfindungsgemäßen Raumlüftungsvorrichtung dargestellt, jetzt aber mit einem Kreuzstrom-Plattenwärmetauscher 30 als Einrichtung zur Energieübertragung. Zur vereinfachten Darstellung sind nur die wesentlichsten Komponenten dargestellt und beispielsweise Gebläse, Filter etc. weggelassen. Die Gehäusewanne 4 und die Dämmung 14 sind zur besseren Darstellung aufgebrochen dargestellt,. Da sich bei diesem Warmetauschertyp die Luftströme im Kreuzstrom zueinander bewegen, befinden sich der Außenluftanschluss 27 und der Fortluftanschluss 26 an einer um die Trennwand 5 gespiegelten Position im Vergleich zum Ausführungsbeispiel in Fig. 1, 2 und 3.

Die Luftströme des Abluft-/Fortluftkanals und des Außen-/Zuluftkanals sind durch eine Trennwand 5, die im Wesentlichen senkrecht zur Ebene der thermischen Gebäudehülle 1 steht, getrennt geführt, wobei die Luftströme des Abluft-/Fortluftkanals und des Außen-/Zuluftkanals im Wesentlichen parallel zur Ebene der thermischen Gebäudehülle 1 geführt werden, jedoch vor und nach dem Energieübertrager 16 um einen Winkel größer als 60° umgelenkt, also treppenförmig, und überkreuz geführt werden. Die Wärmedämmungen 13 und 14 reduzieren potenzielle Wärmeverluste über die Wärmebrücken 11 und 12. Ein weiterer Vorteil bei dieser Ausführung der sich durch den sichtbaren stufenförmigen Verlauf des Abluft-/Fortluftkanals und des Außenluft-/Zuluftkanals ergibt, ist der Thermosiphon-Effekt der auch hier genutzt wird. Der warme Abschnitt des Abluft-/Fortluftkanals bzw. des Au-ßen-/Zuluftkanals liegt Ober der Wärmedämmung 13 und der kalte Abschnitt des Abluft-/Fortluftkanals bzw. des Außen-/Zuluftkanals befindet sich unter der Wärmedämmung 14.

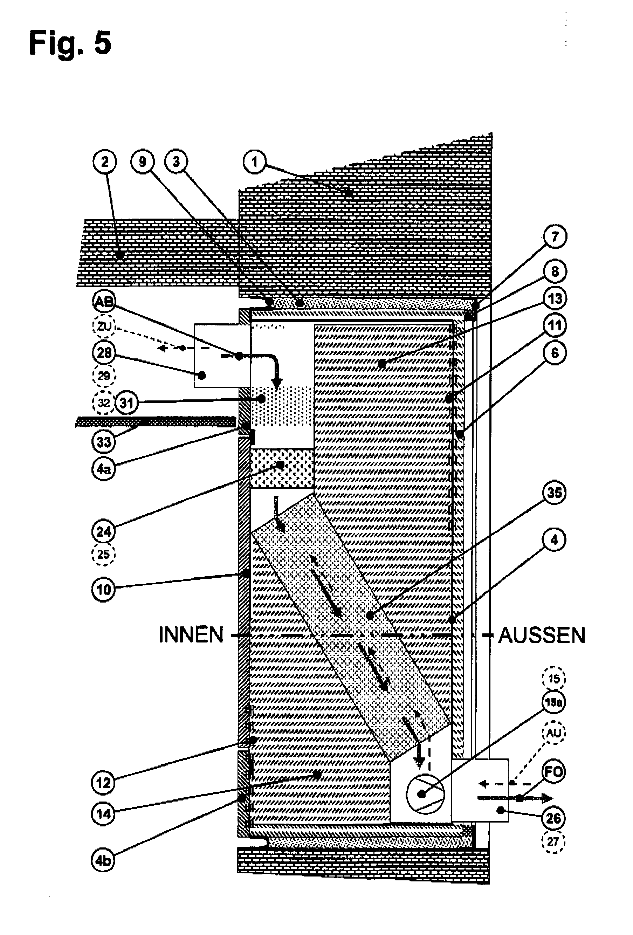

Fig. 5 bietet eine Seitenansicht auf eine Lüftungsvorrichtung mit einem geneigt eingebauten Plattenwärmetauscher 35. Er führt die im Winter kalte Außenluft AU durch den Anschluss 27 von einer Au-ßenseite der Gebäudewand 1 in einem Winkel von etwa 30° gegenüber der Vertikalen durch den Wärmetauscher 35 hindurch über den Anschluss 29 auf die Innenseite der Gebäudewand 1. Die Wärmedämmung 14 verhindert die Entstehung einer Kältebrücke bei Eintritt der kalten Außenluft AU in den Wärmetauscher 35. Je weiter die ursprünglich kalte Außenluft AU im Wärmetauscher 35 aufsteigt, umso mehr Warme nimmt sie zweckentsprechend auf. Um die Effektivität des Wärmetauschers 35 zu erhalten, muss die zunehmend wärmere Luft gegenüber der kalten Außenseite der Gebäudewand 1 gedämmt werden. Umgekehrt nimmt das Erfordernis ihrer thermischen Dämmung gegenüber dem Innenraum ab. Nach Verlassen des Wärmetauschers 35 hat die Luft ihre vorliegend maximal mögliche Wärmeaufnahme erreicht und sie gelangt Ober den Anschluss 29 als Zuluft ZU in den Innenraum, Die Wärmedämmung 13 vermeidet den Verlust der gewonnen Energie der Zuluft ZU gegenüber der Au-ßenwand beim Verlassen der Lüftungsvorrichtung, Es ergibt sich also im Verlauf des Einströmens der Außenluft AU bzw. Zuluft ZU in den Innenraum ein mit der aufgenommen Wärmeenergie wachsendes Bedürfnis nach thermischer Dämmung gegenüber der Außenseite der Gebäudewand, wohingegen das Erfordernis ihrer Dämmung gegenüber dem Innenraum abnimmt Dem entspricht genau die in Strömungsrichtung keilförmige anwachsende Ausbildung der Wärmedämmung 13 gegenüber der Außenwand und die dementsprechend linear abnehmende Dämmung 14 gegenüber dem Innenraum, Damit wird ein wirtschaftlicher Einsatz von Dämmstoff erzielt, der zu geringeren Außenabmessungen der Lüftungsvorrichtung beiträgt.

### Bezugszeichenliste

- 1: thermische Gebäudehülle
- 2: Gebäudedecke
- 3: Montageschaum
- 4: Gehäusewanne
- 4a,b: Gehäuseabdeckung
- 5: Trennwand
- 6: Dämmung
- 7: Blechwinkel
- 8: Dichtungsband
- 9: Fensterklebeband
- 10: Servicetür
- 11: Wärmebrücke
- 12: Wärmebrücke
- 13: Wärmedämmung
- 14: Wärmedämmung
- 15: Gebläse
- 16: Wärmeüberträger
- 17: Blechkonstruktion
- 18: Blechkonstruktion
- 19: Dämmung
- 20: Warmeübertragungstlache
- 21: Wärmedämmung
- 22: Wärmenbertragungsfläche
- 23: Wärmedämmung
- 24: Luftfilter
- 25: Luftfilter
- 26: Anschluss für Fortluft

- 27: Anschluss für Außenluft
- 28: Anschluss für Abluft
- 29: Anschluss für Zuluft
- 30: Wärmeübertragungsfläche
- 31: Schalldämpfer
- 32: Schalldämpfer
- 33: Abgehängte Decke
- 34: Vorgesetzte Wandschale
- 35: Plattenwärmetauscher

- AB: Abluft
- ZU: Zuluft
- FO: Fortluft
- AU: Außenluft

## Patentansprüche

1. Lüftungsvorrichtung zum Einbau in eine thermische Gebäudehülle (1) mit Energierückgewinnung für Innenräume, mit einem Thermosiphon für den Abluftstrom (AB, FO) aus einem Innenraum und für einen Zuluftstrom (ZU, AU) in den Innenraum, mit einem Wärmetauscher (16), der Energie des Abluftstroms (AB, FO) auf den Zuluftstrom (ZU, AU) übertragt, und mit einem Gebläse (15; 15a) fOr den Abluftstrom (AB, FO) und/oder Zuluftstrom (ZU, AU), **dadurch gekennzeichnet, dass** die Luftströme in einem Winkel von mindestens 30° gegenüber der Ebene der thermischen Gebäudehülle (1) geneigt durch den Wärmetauscher (16; 30; 35) geführt sind.

2. Lüftungsvorrichtung nach Anspruch 1, **dadurch gekennzeichnet, dass** die Luftströme durch den Wärmetauscher (16; 30) im Wesentlichen senkrecht zur Ebene der thermischen Gebäudehülle (1) geführt sind.

3. Lüftungsvorrichtung nach Anspruch 1 oder 2, **dadurch gekennzeichnet, dass** die Luftströme (AB; ZU) stromauf und/oder die Luftströme (FO; AU) stromab des Wärmetauschers (16; 30) jeweils mehrmals um einen Winkel von mindestens 30°, vorzugsweise von mindestens 45° und besonders bevorzugt von etwa 90° gegenüber der Ebene der thermischen Gebäudehülle (1) umgelenkt sind.

4. Lüftungsvorrichtung nach einem der obigen Ansprüche, **dadurch gekennzeichnet, dass** der Zuluftstrom (ZU, AU) und der Abluftstrom (AB, FO) im Betrieb der Vorrichtung im Gegenstrom zueinander geführt sind.

5. Lüftungsvorrichtung nach einem der obigen Ansprüche mit wenigstens einem Kanal für die Zuluft (ZU) und die Abluft (AB), **dadurch gekennzeichnet, dass** er mit einer Wärmedämmung (13; 14) gegen die Ausbildung von Wärmebrücken (11; 12) in der thermischen Gebäudehülle (1) versehen ist

6. Lüftungsvorrichtung nach einem der obigen Ansprüche, **gekennzeichnet durch** einen regenerativen Wärmetauscher (16; 30).

7. Lüftungsvorrichtung nach Anspruch 6, **gekennzeichnet durch** einen Plattenwärmetauscher (30; 35) oder einen Rotationswärmetauscher (16).

8. Lüftungsvorrichtung nach Anspruch 7, **gekennzeichnet durch** eine Wärmedämmung (19; 21; 23) an den Wärmeübertragungsflächen (20; 22) der Rotorkassette des Rotationswärmetauschers (16).

9. Lüftungsvorrichtung nach einem der obigen Ansprüche, **gekennzeichnet durch** eine akustische Dämmung (31; 32) im Kanal für die Zuluft (29) und die Abluft (26).

10. Lüftungsvorrichtung nach einem der obigen Ansprüche, **gekennzeichnet durch** mindestens einen zusätzlichen Wärmetauscher und/oder Luftbefeuchter stromauf oder stromab des Wärmetauschers (16; 30; 35).
